Europäisches Patentamt

European Patent Office

Office européen des brevets

(11) Publication number: **0 035 407**
**B1**

# (12) EUROPEAN PATENT SPECIFICATION

(45) Date of publication of patent specification: **12.09.84**

(51) Int. Cl.³: **F 02 P 19/02**

(21) Application number: **81300882.8**

(22) Date of filing: **03.03.81**

(54) Glow plug control system for a Diesel engine.

(30) Priority: **03.03.80 JP 28008/80**

(43) Date of publication of application:
**09.09.81 Bulletin 81/36**

(45) Publication of the grant of the patent:
**12.09.84 Bulletin 84/37**

(84) Designated Contracting States:
**DE FR GB**

(56) References cited:
**FR-A-2 394 223**
**GB-A-1 400 623**
**GB-A-2 001 134**
**GB-A-2 026 603**
**US-A-4 002 882**

**PATENTS ABSTRACTS OF JAPAN, vol. 3, no.
80, (M-65), 11th July 1979, page 166M65**
**PATENTS ABSTRACTS OF JAPAN, vol. 3, no.
140 (M-81), 20th November 1979, page 109M81**

(73) Proprietor: **MITSUBISHI DENKI KABUSHIKI
KAISHA**
**2-3, Marunouchi 2-chome Chiyoda-ku
Tokyo 100 (JP)**

(72) Inventor: **Mitani, Tateki**
**155, Yamanoi-cho**
**City of Himeji Hyogo Prefecture (JP)**
Inventor: **Demizu, Akira**
**2-1, Kamioka-cho Yorii**
**City of Tatsuno Hyogo Prefecture (JP)**

(74) Representative: **Lawson, David Glynne et al
MARKS & CLERK 57-60 Lincoln's Inn Fields
London WC2A 3LS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a glow plug control system for a vehicle diesel engine.

JP—A—54-59535 describes a glow plug control system for a diesel engine, in which a measuring current is passed through the glow plugs, and resistance of the plugs, which varies with the plug temperature, is sensed, and heating current is applied to the plugs for a time dependent on the sensed resistance. In this known system, the heating current and the measuring current for the plugs are provided by a single current source and series resistors are connected to the glow plugs. Consequently any variation in the battery voltage or in the value of the series resistors will introduce an error into the sensed voltage and therefore the measured temperature. This system therefore cannot provide accurate measurement of the plug temperature.

In the accompanying drawings:

Figure 1 is a combined block and circuit diagram of a known glow plug control system, and

Figure 2 shows wave forms developed at various points in the system shown in Figure 1.

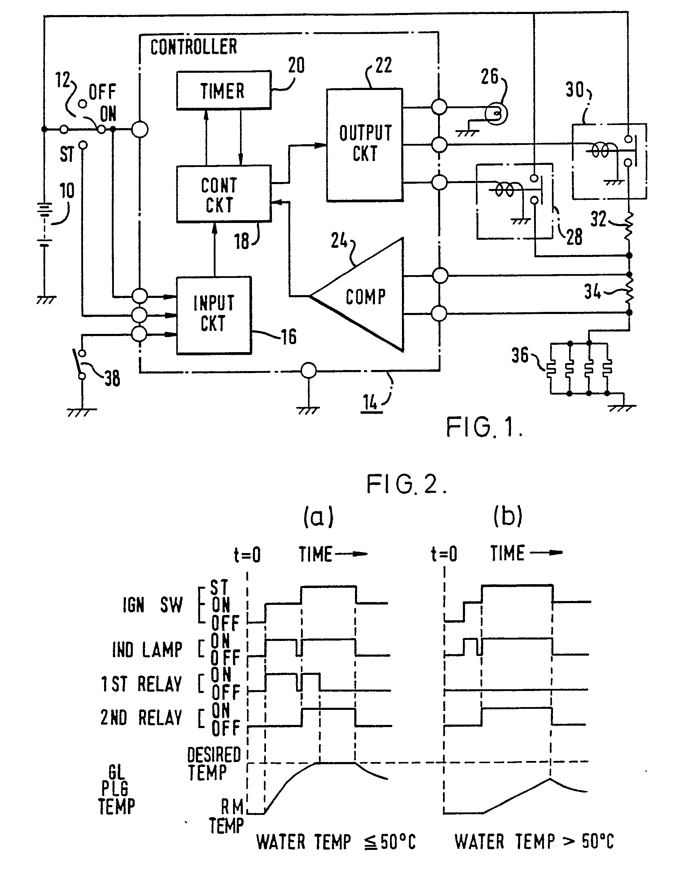

The system shown in Figure 1 comprises a DC source 10 shown as a battery having its negative terminal connected to earth, a normally open ignition switch 12 connected to the positive terminal of the battery 10 and having a pair of stationary contacts or positions designated ON and ST, and a controller generally designated by the reference numeral 14 and connected to the stationary contacts ON and ST of the ignition switch 12. In Figure 1, the ignition switch 12 is shown as being put in the position ON.

The controller 14 includes an input circuit 16 having three inputs two of which are connected to the stationary contacts ON and ST of the ignition switch 12, a control circuit 18 connected to the input circuit 16, a timer 20 connected to the control circuit 18, and a comparator 24 connected to a further input of the control circuit 18.

The output circuit 22 has three outputs connected respectively to an indicator lamp 26 the other side of which is connected to earth, to the winding of a first relay 28 and to the winding of a second relay 30 respectively. Both the relays 28 and 30 have normally open contact sets contact of each being connected to the positive terminal of the battery 10.

The normally open contact set of the second relay 30 is connected by way of a dropping resistor 32 and a sensing resistor 34 to the glow plugs 36 while the contact set of relay 28 is connected to the glow plugs 36 only by way of the sensing resistor 34. Four glow plugs are shown connected in parallel with one another. The resistor 34 is also connected across the inputs of the comparator 24.

The input circuit 16 has a further input connected to a water temperature switch 38 for sensing the temperature of the cooling water of the associated Diesel engine (not shown). The water sensing switch 38 is shown in Figure 1 as being put in its open position and connected to ground.

The operation of the arrangement shown in Figure 1 will now be described in conjunction with Figure 2 wherein there are illustrated waveforms developed at various points in the system. In Figure 2, the lefthand portion (a) illustrates waveforms developed when the temperature of the cooling water does not exceed 50°C while the righthand portion (b) illustrates corresponding waveforms developed when the water temperature is in excess of 50°C.

When the cooling water is at a temperature not higher than 50°C, the water temperature switch 38 is maintained in its open position. When the ignition switch 12 is put in its ON position or at an ON level as shown at the uppermost waveform labelled IGN SW on the lefthand portion (a) in Figure 2, the indication lamp 26 is energized through the closed ignition switch 12 and the controller 14 from the battery 10 (see waveform labelled ING LAMP the lefthand portion (a), Figure 2), and also the first relay 28 is similarly energized (see waveform labelled 1ST RELAY, the lefthand portion (a), Figure 2). Therefore the first relay 28 is energized and its contact set is closed. This closure of the contact set causes current from the battery 10 to flow into the glow plugs 36 through the sensing resistor 34 until the glow plugs 36 reach their red heat state from ambient temperature as shown at the lowermost waveform GL PLG TEMP on the lefthand portion (a) in Figure 2. This current flows through the glow plugs 36 only for a predetermined constant time interval.

Then the indicator lamp 26 is deenergized while at the same time the first relay 28 is deenergized as shown waveforms IND LAMP abd 1ST RELAY on the lefthand portion (a) in Figure 2. Simultaneously with the deenergization of the indicator lamp 26, the ignition switch 12 is put in its position ST or at an ST level as shown at waveform labelled IGn SW on the lefthand portion (a) in Figure 2. At the position ST the battery 10 is still connected to the stationary contact ST of the ignition switch 12 and the Diesel engine is started while the indicator lamp 26 and the first glow relay 28 are again energized (see waveforms IND LAMP and 1ST RELAY on the lefthand portion (a), Figure 2). At the same time the second relay 30 is energized through the ignition switch 12 and the controller 14 from the battery 10 (see waveform labelled 2ND RELAY, the lefthand portion (a), Figure 2). Under these circumstances, the battery 10 supplies a current to the parallel combination of the glow plugs 36 through the closed contact set of the first relay 28 and the sensing resistor 34. Therefore the glow plugs 38 increase gradually in temperature until they reach the desired temperature (see waveform GL PLG TEMP, the lefthand portion (a) Figure 2). At that time the first relay 28 is automatically deenergized through the operation of the controller 14 (see waveform 1ST RELAY, the lefthand portion (a), Figure 2) after which parallel combination of the glow plugs 36 receive the current through the second glow relay 30, and resistors 32 and 34.

Then the engine (not shown) first whereupon the ignition switch 12 is returned to its position ON and simultaneously the second relay 30 and the indicator lamp 26 are deenergized as shown at waveforms IGN SW, IND LAMP and 2ND RELAY on the lefthand portion (a), in Figure 2.

When the water temperature is in excess of 50°C, the water temperature switch 38 is closed and the operation of the arrangement is substantially identical to that described above in conjunction with the water temperature of not higher than 50°C excepting that the indicator lamp 26 is energized for a shorter time interval and that the first relay 28 is maintained inoperative as will readily understood from the corresponding waveforms illustrated on the righthand portion (b) in Figure 2. It is noted that the glow plugs 36 are applied with current only through the second relay 30 and the resistors 32 and 34.

In the arrangement of Figure 1, it has been necessary to provide the sensing resistor 34 exclusively for the purpose of sensing changes in the magnitude of the resistance of the glow plugs due to a change in their temperature. Also the parallel combination of glow plugs 36 is supplied with a current through two current paths with and without the dropping resistor 32 respectively with switching between the current paths. This has resulted both in an increase in the number of components and in a complicated control. In addition, the arrangement of Figure 1 has the disadvantage that the voltage drops across two series resistors namely the resistor 32 and 34 are a primary factor in preventing the temperature of the glow plugs 36 from rising during the start of the associated Diesel engine. This is because such voltage drops acts as power losses upon the battery reducing its capacity and also because the voltage across the battery 10 is reduced at low temperatures.

Accordingly, it is an object of the present invention to provide the glow plug control system which is inexpensive to manufacture and capable of heating rapidly a group of glow plugs by decreasing the power loss.

In accordance with the present invention there is provided a control system for controlling the supply of heating current to glow plugs of a diesel engine, comprising a source of heating current and measuring current for the plugs, sensor means for sensing the resistance of the glow plugs which resistance varies with the plug temperature, and control means for applying the heating current to the plugs for a time dependent on the magnitude of the resistance sensed by the sensor means, characterized in that the heating current is supplied from a first source and the measuring current is a constant current supplied independently from a further source connected independently to the plugs.

The present invention provides a separate current source for the plug temperature measurement. By providing a constant current this eliminates errors in the temperature measurement and because the measuring current source can be properly matched to the characteristics of the plugs and measuring circuit, there is no need for series resistors. Measurement errors due to resistor variations and source fluctuations are therefore eliminated and accurate plug temperature control can be ensured.

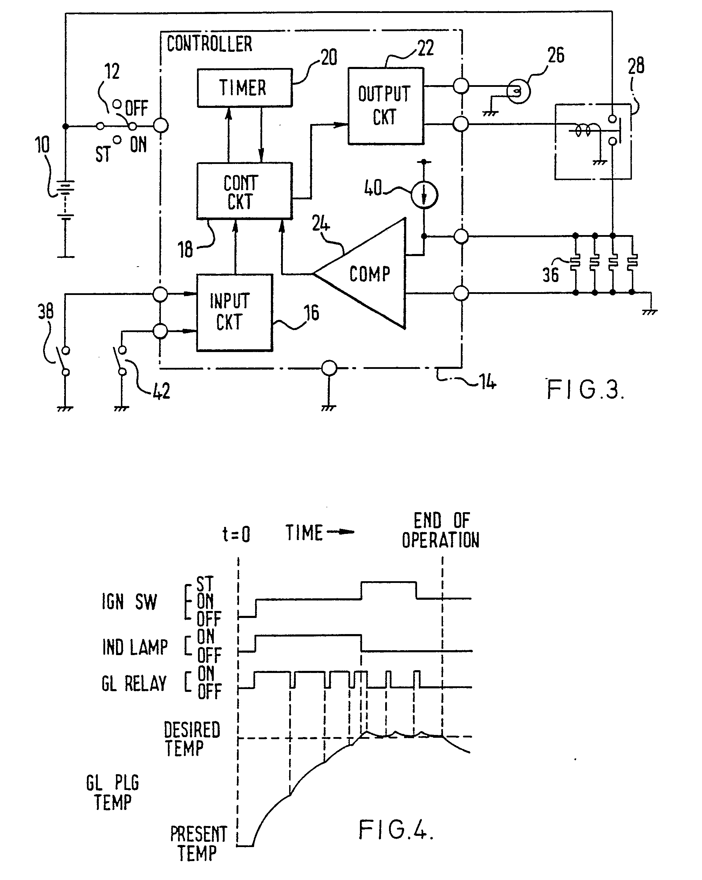

The invention will be further described by way of example with reference to Figures 3 and 4 of the accompanying drawings in which:

Figure 3 is a combined block and circuit diagram of one embodiment of glow plug control system of the present invention, and

Figure 4 is a graph illustrating waveforms developed at various points in the arrangement shown in Figure 3.

Referring to Figure 3 wherein like reference numerals designate the components identical to those shown in Figure 1, there is illustrated an embodiment of a glow plug control system of the present invention. In the arrangement illustrated, the inputs of comparator 24 are connected across the parallel combination of the glow plugs 36 and a constant current source 40 is disposed in the controller 14 to be connected to those ends of the glow plugs 36 remote from ground. The relay 28 has its normally open contact set connected directly to the parallel combination of glow plugs 36 and the second relay 30, the dropping resistor and the sensing resistor are omitted.

The input circuit 16 in the controller 14 does not include a connection to the stationary contact ST of the ignition switch 12 but includes an additional input connected to a regulation switch 42 for an associated electric generator (not shown) subsequently connected to ground. Therefore the stationary contact ST is not connected to the input circuit 16. The switch 42 is shown in Figure 3 as being put in its open position and arranged to be closed in response to the sensing of the start of the associated Diesel engine (not shown).

In other respects, the arrangement is similar to that shown in Figure 1.

The operation of the arrangement shown in Figure 3 will now be described in conjunction with Figure 4 wherein there are illustrated waveforms developed at various points in the arrangement. In Figure 4 like reference characters designate waveforms corresponding to those shown in Figure 2 except for waveform GL RELAY developed on the relay 28 shown in Figure 3.

With the ignition switch 12 put into its ON position, the constant current source 40 supplies a constant current to the parallel combination of glow plugs 36 while the comparator 24 senses the magnitude of resistance of the glow plugs 36 which varies with their temperature thereof thereby to determine the time of conduction of the relay 28. That time of conduction is determined to be proportional to the difference between the desired temperature and the measured temperature of glow plugs at that time.

Then the time of conduction is set in the timer 20. Also indicator lamp 26 is energized through the controller 14 from the DC source 10 and the relay 28 is maintained energized for the time of conduction set in the timer 20 (see waveforms IND LAMP and GL RELAY, Figure 4). Meanwhile, a current from the battery 10 flows into the parallel combination of glow plugs 36 through the closed contact set of the relay 28 to heat the glow plugs 36 to red heat. At that time the constant current from the constant current source 40 does not flow through the glow plugs 36 because the glow plugs 36 have flowing therethrough the current from the battery 10 dependent upon the magnitude of resistance of the glow plug group.

The timing out of the timer 20 terminates the flow of current through the parallel combination of the glow plugs 36, and the constant current source 40 supplies again the constant current to the parallel combination of the glow plugs 36 while the comparator 24 senses the magnitude of their resistance in order again to measure the temperature thereof.

If the glow plugs 36 do not reach the desired temperature as determined by the comparator 24 then the controller 14 is operated to cause the glow plugs 36 to be heated for a further time interval proportional to the difference between the desired and measured temperature through the energization of the relay 28.

The process as described above is repeated to continue intermittently the flow of the current through the parallel combination of glow plugs 36 as shown at waveform GL RELAY in Figure 4 until the glow plugs 36 reach the desired temperature as shown at waveform GL PLG in Figure 4. At that time, the indicator lamp 26 is deenergized as shown at waveform IND LAMP in Figure 4 at the ignition switch 12 is put in its start position ST to start the Diesel engine (not shown).

Under these circumstances the comparator 24 continues to sense the magnitude of the resistance of the glow plugs 36 until the temperature of the glow plugs 36 falls below the desired temperature. At that time the glow plugs 36 are again heated as described above. As the measured temperature in this stage is only minutely different from the desired temperature, the time interval set in the timer 20 need only be short enough to maintain the glow plugs 36 at the desired temperature as will readily understood from the waveforms GL RELAY and GL PLG shown in Figure 4.

Thereafter the engine is completely started and the temperature control as described above continues to be effected until the water for cooling the engine reaches a predetermined constant temperature.

Under these circumstances, the regulation switch 42 senses the complete firing occurring in the engine and the water temperature switch 38 senses the temperature of the cooling water.

The arrangement of Figure 4 can function to sense the break of any one or ones of the glow plugs 36. It is now assumed that a single one of the glow plugs 36 has been broken only for purposes of simplifying the description. On the assumed conditions, the measured resistance will be greater than when all the plugs are functioning correctly so that the resistance value corresponding to red heat is reached prematurely.

As a result, the indicator lamp 26 is deenergized more quickly than that operated in the normal mode which indicates the break of the glow plug. However it is to be understood that the temperature control is effected in the normal mode and that the remaining sound glow plugs are enabled to start the associated Diesel engine.

Thus the present invention provides an inexpensive, reliable glow plug control system capable of performing similarly to that of the prior art with a decreased number of components and without the necessity of using the second relay 30, the dropping resistor 32, and the sensing resistor 34 included in the conventional system shown in Figure 1.

The present invention may be effectively used to control stably the operation of a Diesel engine involved after its start.

**Claims**

1. A control system for controlling the supply of heating current to glow plugs (36) of a diesel engine, comprising a source of heating current and measuring current for the plugs, sensor means (24) and sensing the resistance of the glow plugs which resistance varies with the plug temperature, and control means (18, 20) for applying the heating current to the plugs for a time dependent on the magnitude of the resistance sensed by the sensor means (24), characterized in that the heating current is supplied from a first source (10) and the measuring current is a constant current supplied independently from a further source (40) connected independently to the plugs.

2. A glow plug control system as claimed in claim 1 characterized by a sensor (42) responsive to starting of the diesel engine for maintaining operation of the control system until the engine starts.

**Patentansprüche**

1. Steuervorrichtung zur Steuerung der Glühstrombeaufschlagung von Glühkerzen (36) einer Diesel-Brennkraftmaschine, mit einer Quelle für Glühstrom und Meßstrom für die Kerzen, Fühlmitteln (24) zum Erfühlen des Widerstandes der Glühkerzen, welcher sich mit der Kerzentemperatur ändert, und Steuermitteln (18, 20) zur Beaufschlagung der Kerzen mit Glühstrom für eine von der Größenordnung des von dem Fühlmittel (24) erfühlten Widerstandes abhängige Zeit, dadurch gekennzeichnet, daß der Glühstrom von einer ersten Quelle (10) geliefert wird und daß der Meßstrom ein konstanter Strom ist, der unabhängig von einer weiteren, unabhängig mit den Kerzen verbundenen Quelle (40) geliefert wird.

2. Steuervorrichtung für Glühkerzen gemäß Anspruch 1, gekennzeichnet durch einen beim Start der Dieselmaschine ansprechenden Sensor (42), um die Steuervorrichtung bis zum Start der Maschine in Betrieb zu halten.

**Revendications**

1. Dispositif de commande permettant de commander l'alimentation en courant de chauffage des bougies à incandescence (36) d'un moteur diesel, comprenant une source de courant de chauffage et de courant de mesure pour les bougies, un moyen de détection (24) permettant de détecter la résistance des bougies à incandescence, laquelle varie avec la température des bougies, et des moyens de commande (18, 20) servant à appliquer le courant de chauffage aux bougies pendant un laps de temps qui dépend de la grandeur de la résistance détectée par le moyen de détection (24), caractérisé en ce que le courant de chauffage est fourni par une première source (10) et en ce que le courant de mesure est un courant constant qui est fourni indépendamment par une autre source (40) connectée indépendamment aux bougies.

2. Dispositif de commande de bougies à incandescence tel qu'il est revendiqué dans la revendication 1, caractérisé par un détecteur (42) qui réagit au démarrage du moteur diesel en maintenant le fonctionnement du dispositif de commande jusqu'à ce que le moteur démarre.

FIG.1.

FIG.2.

(a)  (b)

WATER TEMP ≦ 50°C    WATER TEMP > 50°C

FIG.3.

FIG.4.